# EUROPÄISCHE PATENTSCHRIFT

(11) **EP 3 931 017 B1**
(45) Veröffentlichungstag und Bekanntmachung des Hinweises auf die Patenterteilung: **11.11.2026**
(21) Anmeldenummer: 20702784.8
(22) Anmeldetag: 30.01.2020
(51) Int. Cl.: B60K 1/04

(54) **KAROSSERIESTRUKTUR FÜR EIN ELEKTRISCH BETRIEBENES FAHRZEUG**
BODY STRUCTURE FOR AN ELECTRICALLY OPERATED VEHICLE
STRUCTURE DE CARROSSERIE POUR VÉHICULE À FONCTIONNEMENT ÉLECTRIQUE

(30) Priorität: 28.02.2019 DE 102019202753
(43) Veröffentlichungstag der Anmeldung: 05.01.2022
(73) Patentinhaber: VOLKSWAGEN AKTIENGESELLSCHAFT, 38440 Wolfsburg (DE)
(72) Erfinder: KRAUTH, Werner, 38442 Wolfsburg (DE)
(86) Internationale Anmeldenummer: PCT/EP2020/052234
(87) Internationale Veröffentlichungsnummer: WO 2020/173650

(56) Entgegenhaltungen:
- DE-U1- 9 320 666
- US-A1- 2012 121 959
- US-A1- 2017 058 936
- US-A1- 2017 305 249
- US-A1- 2017 305 249

## Beschreibung

Die Erfindung betrifft eine Karosseriestruktur für ein elektrisch betriebenes Fahrzeug nach dem Oberbegriff des Anspruches 1.

Ein elektrisch betriebenes Fahrzeug kann einen in der Fahrzeughochrichtung nach fahrzeugunten offenen Montageraum für eine Traktionsbatterie aufweisen, der nach fahrzeugoben durch ein Fahrzeugbodenblechteil begrenzt ist. In diesem Fall kann die Traktionsbatterie von fahrzeugunten in den Montageraum eingesetzt sein und mit der Karosseriestruktur verschraubt sein. Der Traktionsbatterie-Montageraum kann in der Fahrzeuglängsrichtung durch vordere und hintere Querträger der Karosseriestruktur begrenzt sein sowie in der Fahrzeugquerrichtung durch seitliche Schweller des Fahrzeugs begrenzt sein. Bei einem Crash (von der Seite, in Längsrichtung oder außermittig, das heißt Offsetcrash) kann somit die Traktionsbatterie als ein Schubfeld wirken, mittels dem die Crashenergie von einer crashzugewandten Fahrzeugseite zu einer crashabgewandten Fahrzeugseite weitergeleitet wird.

In einer gattungsgemäßen Karosseriestruktur untergreift ein Gehäuseflansch der Traktionsbatterie ein karosserieseitiges Blechprofilteil eines seitlichen Schwellers bzw. eines Querträgers der Karosseriestruktur. Der Gehäuseflansch der Traktionsbatterie ist von fahrzeugunten mit dem Blechprofilteil an zumindest einer Schraubstelle verschraubt. Die Schraubstelle weist einen in der Fahrzeughochrichtung ausgerichteten Schraubbolzen auf, der mit Lochspiel durch einen Gehäuseflansch-Durchführungskanal und durch ein Blechprofilteil-Schraubloch geführt ist sowie mit einer Schweißmutter verschraubt ist. Die Schweißmutter ist auf der, dem Gehäuseflansch abgewandten Seite des Blechprofilteils aufgeschweißt. In der Zusammenbaulage ist daher der Traktionsbatterie-Gehäuseflansch zwischen einem Schraubkopf des Schraubbolzens und dem Blechprofilteil festgespannt.

Bei einem Crashfall wird die Traktionsbatterie (quer zur Schraubrichtung) crashbedingt verlagert, bis eine Innenwand des Gehäuseflansch-Durchführungskanals unter Aufbrauch des Lochspiels gegen den Schraubbolzen anschlägt und der Schraubbolzen gegen einen Öffnungsrand des Blechprofilteil-Schraubloches drückt, und zwar unter Scherbelastung des Schraubbolzens.

Das Blechprofilteil ist meist als ein hochfestes Warmumformteil realisiert, so dass deren Beschnittkante im obigen Crashfall wie ein Messer auf den Schraubbolzen wirkt. Von daher besteht das Risiko, dass der Schraubbolzen aufgrund der darauf wirkenden Scherbelastung abgeschert wird.

Aus der DE 10 2011 102 2 A1 ist eine Anordnung einer Traktionsbatterie in einem Fahrzeug bekannt. Aus der DE 93 20 666 U1 ist ein Verbindungselement zur Verwendung beim Widerstands-Impulsschweißen nach dem Kondensator-Entladungsprinzip bekannt.

US2017305249A1 beschreibt eine Batteriemontagestruktur zur Aufrechterhaltung eines ausreichenden Fahrgastraums in Fahrzeugen. Die Batteriemontagestruktur umfasst ein Paar Längsseitenschweller und einen Batteriesatz, der zwischen den Seitenschwellern angeordnet ist.

Aus der US2012121959A1 ist eine Fahrzeugbatterieeinheit bekannt, welche einen Batterieeinheitskörper, einen Hohlrahmen und ein Abflussrohr umfasst. Der Körper der Batterieeinheit umfasst eine erste Bodenfläche zur Aufnahme einer ersten Batterie. Der Hohlrahmen ist entlang der ersten Bodenfläche des Batterieeinheitskörpers angeordnet, um den Batterieeinheitskörper zu verstärken, und weist ein erstes Abflussloch auf, das die erste Bodenfläche des Batterieeinheitskörpers mit einem Inneren des Hohlrahmens verbindet.

US2017058936A1 beschreibt eine Schweißmutter, welche durch eine im Basismaterial ausgebildete Muttereinführöffnung an ein Basismaterial geschweißt wird. Die Schweißmutter umfasst einen Mutternkörper, der wie eine Schweißmutter aussieht, und eine Einführkomponente, die so geformt ist, dass sie integral von der ersten Oberfläche des Mutternkörpers hervorsteht und in die Muttereinführöffnung eingeführt wird. Zusätzlich ist eine Schraubenbefestigungsöffnung ausgebildet, die zusammen mit der Einsteckkomponente durch die Mitte des Mutternkörpers verläuft.

Die Aufgabe der Erfindung besteht darin, eine Karosseriestruktur für ein elektrisch betriebenes Fahrzeug bereitzustellen, bei der in einfacher Weise eine crashfeste Anbindung der Traktionsbatterie an der Karosseriestruktur ermöglicht ist.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil ist die Schweißmutter zur Reduzierung der crashbedingten Scherbelastung mit einem Schaft verlängert. Der Schweißmutter-Schaft ragt zumindest in das Blechprofilteil-Schraubloch ein. Im Crashfall wird somit der Schraubbolzen nicht mehr direkt gegen den Öffnungsrand (das heißt Beschnittkante) des Blechprofilteil-Schraubloches gedrückt, sondern vielmehr unter Zwischenlage des Schweißmutter-Schafts. Durch Bereitstellung des Schweißmutter-Schafts wird somit nicht mehr nur der Schraubbolzen-Kerndurchmesser als "Partner" der Scherbelastung entgegengesetzt. Vielmehr wird durch Einsatz des Schweißmutter-Schafts der wirksame Schraubbolzen-Durchmesser vergrößert, der dieser Scherbelastung entgegenwirkt.

Dabei weist die Innenwandung des Gehäuseschaft-Durchführungskanals über die Kanallänge nicht komplett einen konstanten Innendurchmesser auf, sondern vielmehr ist sie in einen durchmessergroßen Kanalabschnitt und in einen durchmesserkleinen Kanalabschnitt aufgeteilt, die an einer Ringschulter ineinander übergehen. In diesem Fall kann bevorzugt der durchmesserkleine Kanalabschnitt auf der, dem Schraubkopf zugewandten Seite in den stirnseitigen Öffnungsrandbereich des Gehäuseflansch-Durchführungskanals übergehen, gegen den der Schraubkopf des Schraubbolzens verspannt ist. Der durchmesserkleine Kanalabschnitt gewährleistet eine ausreichend große Abstützfläche zwischen dem Schraubkopf und dem stirnseitigen Öffnungsrandbereich des Gehäuseflansch-Durchführungskanals. Der durchmessergroße Kanalabschnitt gewährleistet dagegen einen freien Radialspalt zwischen dem Schweißmutter-Schaft und der Innenwandung des Gehäuseflansch-Durchführungskanals. Erfindungsgemäß sind sowohl die Innenwandung des Gehäuseflansch-Durchführungskanals als auch der Schweißmutter-Schaft mit Anschlagkonturen gestaltet, um im Crashfall eine einwandfreie Kraftüberleitung von der Traktionsbatterie in das karosserieseitige Blechprofilteil zu gewährleisten, und zwar unter weitgehend kraftfreier Überbrückung des Schraubbolzens, um ein Schraubbolzen-Materialversagen zu vermeiden.

In einer technischen Umsetzung kann der Schweißmutter-Schaft mit einem Überstand die, dem Gehäuseflansch zugewandte Seite des Blechprofilteils überragen. Von daher erstreckt sich der Schweißmutter-Schaft bis in den Gehäuseflansch-Durchführungskanal hinein. Im Crashfall drückt somit die Innenwand des Gehäuseflansch-Durchführungskanals nicht mehr direkt gegen den Schraubbolzen, sondern vielmehr unter Zwischenlage des Schweißmutter-Schafts.

In der Zusammenbaulage ist der Schraubkopf des Schraubbolzens gegen einen Öffnungsrandbereich des Gehäuseflansch-Durchführungskanals verspannt. Um eine einwandfreie Schraubverbindung zu gewährleisten, kann der Schweißmutter-Schaft mit seiner, dem Bolzenkopf des Schraubbolzens zugewandten Schaft-Stirnseite um einen axialen Freigang vom Bolzenkopf des Schraubbolzens beabstandet sein.

Vor diesem Hintergrund kann die Axiallänge des durchmesserkleinen Kanalabschnittes kleiner bemessen sein als der axiale Freigang zwischen der Stirnseite des Schweißmutter-Schafts und dem Bolzenkopf des Schraubbolzens. Der durchmesserkleine Kanalabschnitt und der axiale Freigang können bevorzugt in radialer Flucht zueinander angeordnet sein.

In diesem Fall ergibt sich ein nachfolgend beschriebener bevorzugter Crashverlauf: So kann der durchmessergroße Kanalabschnitt des Gehäuseflansch-Durchführungskanals quer zur Schraubrichtung in Anlage mit dem Außenumfang des Schweißmutter-Schafts kommen, während der durchmesserkleine Kanalabschnitt in den axialen Freigang (zwischen der Schaft-Stirnseite und dem Bolzenkopf des Schraubbolzens) einfährt.

Zudem kann der Außenumfang des Schweißmutter-Schafts an einer umlaufenden Außenecke in die Schaft-Stirnseite übergehen. Korrespondierend dazu kann zwischen dem durchmessergroßen Kanalabschnitt und einer Ringfläche der Ringschulter eine umlaufende Innenecke ausgebildet sein, die eine Negativform der Schaft-Außenecke bildet. In diesem Fall kann im Crashfall die Innenecke im Gehäuseflansch-Durchführungskanal die Schaft-Außenecke formschlüssig umgreifen.

Zur Reduzierung der Scherbelastung des Schraubbolzens ist es von Bedeutung, dass ein unmittelbarer Kontakt zwischen dem durchmesserkleinen Kanalabschnitt des Gehäuseflansch-Durchführungskanals mit dem Bolzenschaft des Schraubbolzens vermieden wird. Vor diesem Hintergrund kann der durchmesserkleine Kanalabschnitt um einen Radialversatz den durchmessergroßen Radialabschnitt nach radial innen überragen. Der Radialversatz kann kleiner bemessen sein als eine Wandstärke des Schweißmutter-Schafts. Von daher ist gewährleistet, dass im Crashfall der durchmesserkleine Kanalabschnitt außer Anlage mit dem Bolzenschaft des Schraubbolzens bleibt.

In einer weiteren Ausführungsform kann der Gehäuseflansch unter Zwischenlage einer Spannhülse gegen das Blechprofilteil verspannt sein, die rotationssymmetrisch ausgebildet ist. Die Spannhülse kann mit einer Abstützbasis auf dem Gehäuseflansch abgestützt sein, die einen hohlzylindrischen fahrzeugunteren Hülsenabschnitt aufweist, der an einer Übergangskante in einen radial nach außen ragenden umlaufenden Randflansch übergeht. Durch die Spannhülse ist der Schraubbolzen geführt. Der hohlzylindrische Hülsenabschnitt kann in Anlage mit der Innenwand des durchmessergroßen Kanalabschnitts des Gehäuseflansch-Durchführungskanals sein, während die Übergangskante und der radial nach außen abragende Stützflansch auf den, dem Blechprofilteil zugewandten Öffnungsrandbereich des Gehäuseflansch-Durchführungskanals abgestützt ist. Zudem kann die Spannhülse mit einem fahrzeugoberen Hülsenabschnitt am Öffnungsrandbereich des Blechprofilteil-Schraubloches abgestützt sein.

Nachfolgend ist ein Ausführungsbeispiel der Erfindung anhand der beigefügten Figuren beschrieben.

Es zeigen:
- Figur 1: in einer perspektivischen Teilraumansicht eine Karosseriestruktur eines elektrisch betriebenen Fahrzeugs;
- Figur 2: eine Teilschnittdarstellung entlang einer Schnittebene yz aus der Figur 1;
- Figur 3: eine vergrößerte Schnittdarstellung einer Schraubstelle aus der Figur 2 bei normalem Fahrbetrieb; und
- Figur 4: eine Ansicht entsprechend der Figur 3 bei einem Seitencrashfall; sowie
- Figuren 5 und 6: jeweils Ansichten weiterer Ausführungsbeispiele.

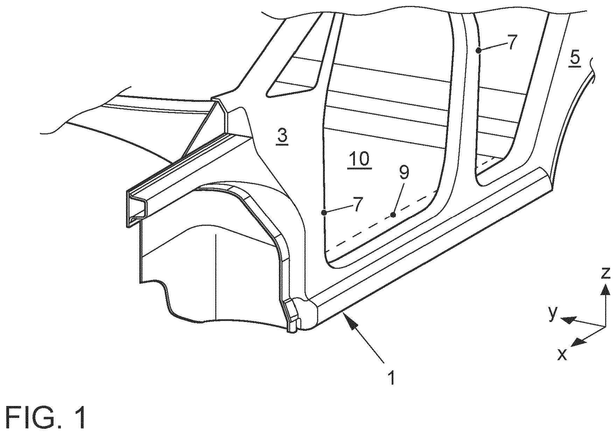

In der Figur 1 ist die Karosseriestruktur eines zweispurigen Fahrzeugs gezeigt, die nachfolgend insoweit beschrieben ist, als es für das Verständnis der Erfindung erforderlich ist. Demzufolge weist die Karosseriestruktur zwei seitliche, in der Fahrzeuglängsrichtung x verlaufende Schweller 1 auf, von denen in der Figur 1 lediglich einer gezeigt ist. Der Schweller 1 erstreckt sich in der Fahrzeuglängsrichtung x zwischen einer vorderen A-Säule 3 sowie einer hinteren C-Säule 5 und begrenzt bodenseitig Seitentüröffnungen 7. Im Fahrzeugboden der Karosseriestruktur ist eine crashsensible Traktionsbatterie 9 verbaut. Diese ist unterhalb eines Bodenblechteils 10 positioniert und erstreckt sich in der Fahrzeugquerrichtung y zwischen den beiden Schwellern 1. In der Fahrzeuglängsrichtung x erstreckt sich die Traktionsbatterie 9 zwischen einem vorderen Querträger und einem hinteren Querträger, die in den Figuren nicht gezeigt sind.

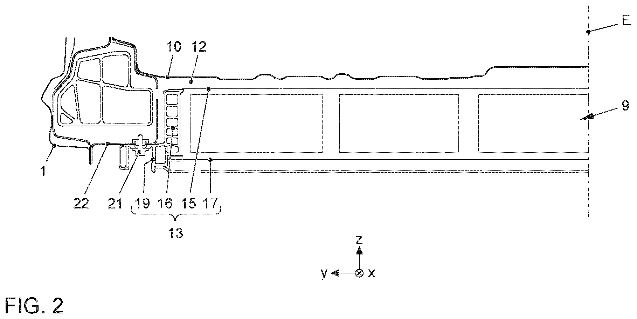

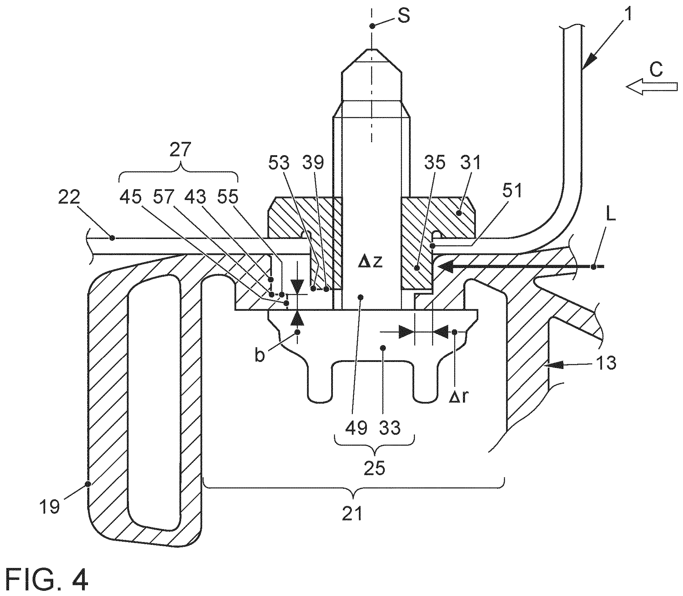

Wie aus der Figur 1 hervorgeht, ist die Traktionsbatterie 9 in der Fahrzeughochrichtung z betrachtet in etwa auf gleicher Höhe wie die Schweller 1 positioniert. Die Traktionsbatterie 9 weist in der Figur 2 ein Batteriegehäuse 13 auf, und zwar mit einer Gehäuse-Seitenwand 16, einer Deckwand 15 sowie einer Bodenwand 17. Die Gehäuse-Seitenwand 16 ist mit einem seitlich abragenden Gehäuseflansch 19 ausgebildet, der den Schweller 1 untergreift und mit einem Blechprofilteil 22 des Schwellers 1 in einer Schraubverbindung 21 ist. In der Figur 2 ist lediglich eine Hälfte der Karosseriestruktur bis zur Fahrzeugmittelebene E gezeigt. Die nicht dargestellte andere Hälfte ist in etwa spiegelbildlich dazu ausgeführt. Bei einem später beschriebenen Seitencrashfall werden die Aufprallkräfte C (Figur 4) vom crashzugewandten Schweller 1 in einem Quer-Lastpfad, in dem die Traktionsbatterie 9 als bauteilsteifes Schubfeld eingebunden ist, in Richtung auf den crashabgewandten Schweller 1 weitergeleitet.

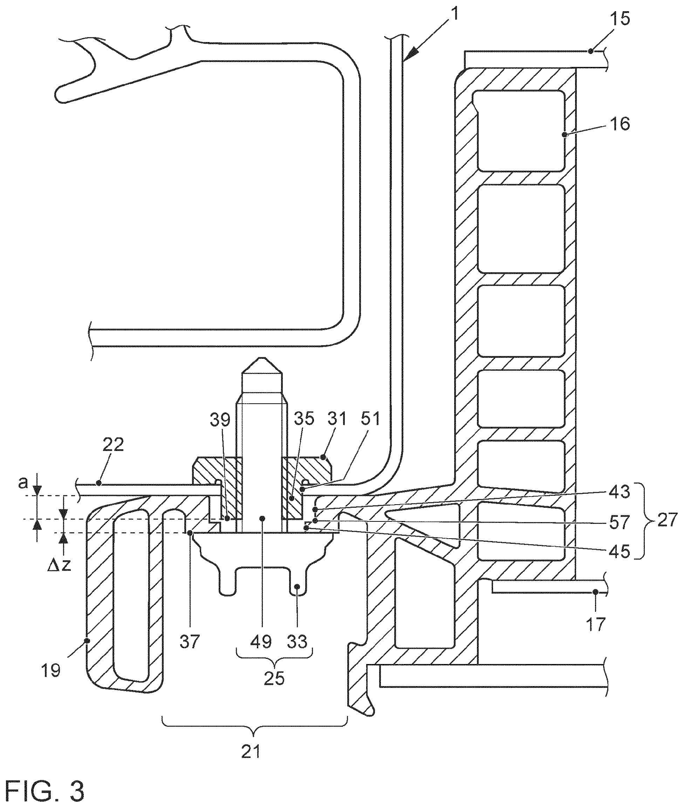

Anhand der Figur 3 ist nachfolgend die Schraubstelle 21 beschrieben: Demzufolge ist der Gehäuseflansch 19 von fahrzeugunten mittels eines in Fahrzeughochrichtung z ausgerichteten Schraubbolzens 25 verschraubt. Der Schraubbolzen 25 ist mit Lochspiel durch einen Gehäuseflansch-Durchführungskanal 27 und durch ein Blechprofilteil-Schraubloch geführt sowie mit einer Schweißmutter 31 verschraubt. Die Schweißmutter 31 ist in der Figur 3 auf der, dem Gehäuseflansch 19 abgewandten Seite des Blechprofilteils 22 aufgeschweißt. Von daher ist der Gehäuseflansch 19 zwischen einem Schraubkopf 33 des Schraubbolzens 25 und dem Blechprofilteil 22 festgespannt.

In der Figur 3 ist die Schweißmutter 31 mit einem Schaft 35 verlängert, der sich durch das Blechprofilteil-Schraubloch erstreckt und mit einem Überstand a die den Gehäuseflansch 19 zugewandte Seite des Blechprofilteils 22 überragt. Der Schraubkopf 33 des Schraubbolzens 25 ist in der Figur 3 gegen einen stirnseitigen Öffnungsrandbereich 37 des Gehäuseflansch-Durchführungskanals 27 verspannt. Zudem ist der Schweißmutter-Schaft 35 in der Figur 3 mit seiner, dem Bolzenkopf 33 des Schraubbolzens 25 zugewandten Stirnseite 39 um einen axialen Freigang Δz vom Bolzenkopf 33 des Schraubbolzens 25 beabstandet.

Wie aus der Figur 3 weiter hervorgeht, weist eine Innenwandung des Gehäuseflansch-Durchführungskanals 27 einen durchmessergroßen Kanalabschnitt 43 und einen durchmesserkleinen Kanalabschnitt 45 auf, die an einer Ringschulter ineinander übergehen. Der durchmesserkleine Kanalabschnitt 45 geht auf der, dem Schraubkopf 33 zugewandten Seite in den Öffnungsrandbereich 37 des Gehäuseflansch-Durchführungskanals 19 über, gegen den der Schraubkopf 33 des Schraubbolzens 25 verspannt ist.

Die Axiallänge b (Figur 4) des durchmesserkleinen Kanalabschnitts 45 ist kleiner bemessen als der axiale Freigang Δz zwischen der Schaft-Stirnseite 39 und dem Bolzenkopf 33 des Schraubbolzens 25. Zudem sind in der Figur 3 der durchmesserkleine Kanalabschnitt 45 und der axiale Freigang Δz in radialer Flucht (dh. in der Fahrzeugquerrichtung y) zueinander angeordnet.

Nachfolgend wird der Crashverlauf bei einem Seitencrashfall beschrieben, bei dem die Traktionsbatterie 9 in einer Crashrichtung C (Figur 4) innerhalb des Montageraums 12 in Fahrzeugquerrichtung y verlagert wird: Demnach stößt der durchmessergroße Kanalabschnitt 43 des Gehäuseflansch-Durchführungskanals 27 gegen den Außenumfang des Schweißmutter-Schafts 35, während der durchmesserkleine Kanalabschnitt 45 in den axialen Freigang Δz zwischen der Schaft-Stirnseite 39 und dem Bolzenkopf 33 einfährt.

Der durchmesserkleine Kanalabschnitt 45 ist in der Figur 3 um einen Radialversatz Δr gegenüber dem durchmessergroßen Kanalabschnitt 43 nach radial innen versetzt. Der Radialversatz Δr ist dabei kleiner bemessen als eine Wandstärke des Schweißmutter-Schafts 35. Auf diese Weise ist gewährleistet, dass im Crashfall (Figur 4) der durchmesserkleine Kanalabschnitt 45 außer Anlage mit dem Bolzenschaft 49 des Schraubbolzens 25 bleibt. Mittels der obigen Bauteil-Geometrie an der Schraubstelle 21 ergibt sich der in der Figur 4 angedeutete Crashlastpfad L, bei dem die Crashlast vom Batteriegehäuse 13 über dessen Gehäuseflansch 19 in den Schweißmutter-Schaft 35 eingeleitet wird und von dort über den Öffnungsrand (das heißt Beschnittkante) 51 in das Blechprofiteil 22 der Karosserie weitergeleitet wird. Der Bolzenschaft 49 des Schraubbolzens 25 kommt somit weder mit der Beschnittkante 51 des Blechprofilteils 22 noch mit der Innenwand des Gehäuseflansch-Durchführungskanals 27 unmittelbar in Kontakt, wodurch eine auf den Schraubbolzen 25 wirkende Scherbelastung quer zur Schraubrichtung S reduziert ist.

Wie aus den Figuren 3 und 4 weiter hervorgeht, geht der Außenumfang des Schweißmutter-Schafts 35 an einer umlaufenden Außenecke 53 in die Schaft-Stirnseite 39 über. Analog dazu ist in der Figur 3 zwischen dem durchmessergroßen Kanalabschnitt 43 und einer Ringfläche 55 eine umlaufende Innenecke 57 aufgespannt, die eine Negativform der Schaft-Außenecke 53 bildet. Im Crashfall (Figur 4) umgreift die Gehäuseflansch-Innenecke 57 die Schaft-Außenecke 53 formschlüssig.

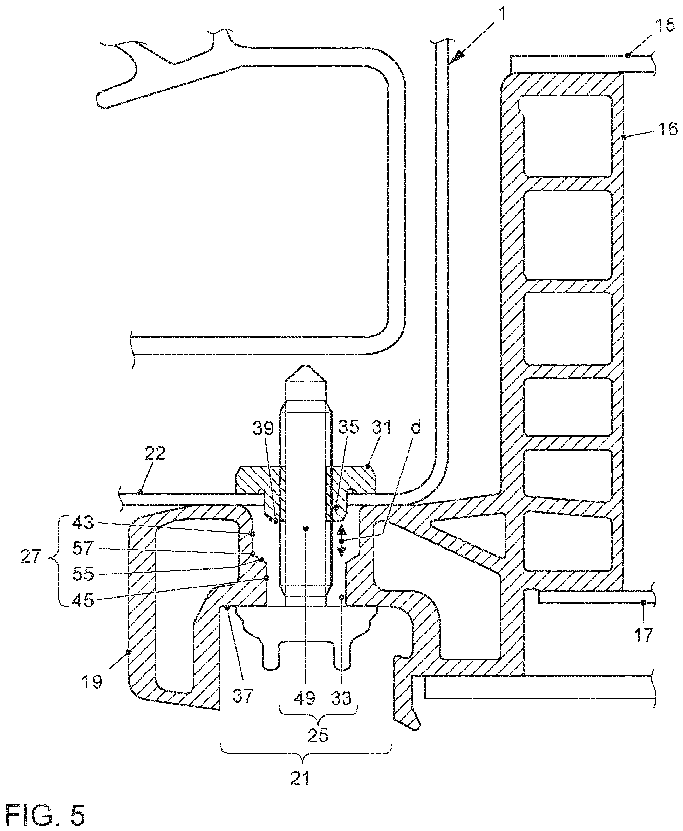

In der Figur 5 ist in einer Ansicht entsprechend der Figur 3 eine Schraubstelle 21 gemäß einem zweiten Ausführungsbeispiel gezeigt, deren Geometrie im Wesentlichen baugleich mit dem vorangegangenen ersten Ausführungsbeispiel ist. Im Unterschied zur Figur 3 oder 4 ist in der Figur 5 die Ringfläche 55 der Ringschulter über einen freien Axial-Abstand d von der Schaft-Stirnseite 49 beabstandet.

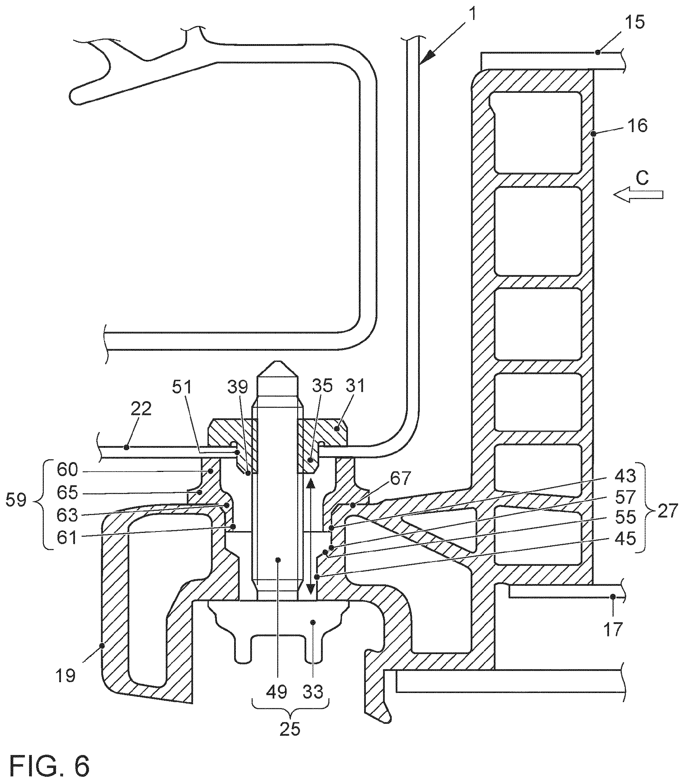

In der Figur 6 ist eine Schraubverbindung 21 gemäß einem weiteren Ausführungsbeispiel gezeigt. Demzufolge ist in der Figur 6 der Gehäuseflansch 19 unter Zwischenlage einer Spannhülse 59 gegen das Blechprofilteil 22 verspannt, die rotationssymmetrisch ausgebildet ist. Die Spannhülse 59 ist mit einer Abstützbasis auf dem Gehäuseflansch 19 abgestützt. Die Abstützbasis besteht in der Figur 6 aus einem hohlzylindrischen fahrzeugunteren Hülsenabschnitt 61, der an einer Übergangskante 63 in einen radial nach außen ragenden umlaufenden Randflansch 65 übergeht. Durch die Spannhülse 59 ist der Schraubbolzen 25 geführt. Der hohlzylindrische Hülsenabschnitt 61 ist in der Figur 6 in Anlage mit dem durchmessergroßen Kanalabschnitt 43 des Gehäuseflansch-Durchführungskanals 27, während die Übergangskante 63 und der radial nach außen abragende Stützflansch 65 auf den, dem Blechprofilteil 22 zugewandten Öffnungsrandbereich 67 des Gehäuseflansch-Durchführungskanals 27 abgestützt ist. Zudem weist die Spannhülse 59 mit einem fahrzeugoberen Hülsenabschnitt 60 am Öffnungsrandbereich des Blechprofilteil-Schraubloches abgestützt.

Nachfolgend wird der Crashverlauf bei einem Seitencrashfall beschrieben, bei dem die Traktionsbatterie 9 in einer Crashrichtung C (Figur 6) innerhalb des Montageraums 12 in Fahrzeugquerrichtung y verlagert wird: Demnach stößt der der fahrzeugobere Hülsenabschnitt 60 der Spannhülse 59 an den Außenumfang des Schweißmutter-Schafts 35, während fahrzeuguntere Hülsenabschnitt 61 der Spannhülse 59 in den axialen Freigang Δz zwischen der Schaft-Stirnseite 39 und dem Bolzenkopf 33 einfährt, ohne den Bolzenschaft 49 des Schraubbolzens 25 zu berühren.

### Bezugszeichenliste

- 1: Schweller
- 3: A-Säule
- 5: C-Säule
- 7: Seitentüröffnung
- 9: Traktionsbatterie
- 10: Bodenblechteil
- 12: Montageraum
- 13: Batteriegehäuse
- 16: Gehäuse-Seitenwand
- 15: Deckwand
- 17: Bodenwand
- 19: Gehäuseflansch
- 21: Schraubverbindung
- 22: Blechprofilteil
- 25: Schraubbolzen
- 27: Gehäuseflansch-Durchführungskanal
- 31: Schweißmutter
- 33: Schraubkopf
- 35: Schweißmutter-Schaft
- 37: Öffnungsrandbereich
- 39: Schaft-Stirnseite
- 43: durchmessergroßer Kanalabschnitt
- 45: durchmesserkleiner Kanalabschnitt
- 49: Bolzenschaft
- 51: Beschnittkante
- 53: Außenecke
- 55: Ringfläche
- 57: Innenecke
- 59: Spannhülse
- 60: fahrzeugoberer Hülsenabschnitt
- 61: fahrzeugunterer Hülsenabschnitt
- 63: Übergangskante
- 65: Stützflansch
- 67: Öffnungsrandbereich
- E: Fahrzeugmittellängsebene
- S: Schraubrichtung
- L: Lastpfad
- a: Überstand
- b: Axiallänge
- d: freien Axial-Abstand
- Δz: axialer Freigang
- Δr: Radialversatz

## Patentansprüche

1. Karosseriestruktur für ein elektrisch betriebenes Fahrzeug, mit einem in der Fahrzeughochrichtung (z) nach fahrzeugunten offenen Montageraum (12) für eine Traktionsbatterie (9), der nach fahrzeugoben durch ein Fahrzeugbodenblechteil (10) begrenzt ist, wobei die Traktionsbatterie (9) von fahrzeugunten in den Montageraum (12) eingesetzt ist, und wobei ein Gehäuseflansch (19) der Traktionsbatterie (9) ein karosserieseitiges Blechprofilteil (10) untergreift und von fahrzeugunten mit dem Blechprofilteil (10) an zumindest einer Schraubstelle (21) verschraubt ist, wobei die Schraubstelle (21) einen in Fahrzeughochrichtung (z) ausgerichteten Schraubbolzen (25) aufweist, der mit Lochspiel durch einen Gehäuseflansch-Durchführungskanal (27) und durch ein Blechprofilteil-Schraubloch geführt ist sowie mit einer Schweißmutter (31) verschraubt ist, die auf der, dem Gehäuseflansch (19) abgewandten Seite des Blechprofilteils (22) aufgeschweißt ist, so dass der Gehäuseflansch (19) zwischen einem Schraubkopf (33) des Schraubbolzens (25) und dem Blechprofilteil (10) festgespannt ist, und wobei im Crashfall die Traktionsbatterie (9) crashbedingt verlagert wird, bis eine Innenwand des Gehäuseflansch-Durchführungskanals (27) den Schraubbolzen (25) gegen einen Öffnungsrand (51) des Blechprofilteil-Schraubloches drückt, und zwar unter Scherbelastung des Schraubbolzens (25), **wobei** zur Reduzierung der Scherbelastung die Schweißmutter (31) mit einem Schaft (35) verlängert ist, der zumindest in das Blechprofilteil-Schraubloch einragt, und dass im Crashfall der Schraubbolzen (25) unter Zwischenlage des Schweißmutter-Schafts (35) gegen den Öffnungsrand (51) des Blechprofilteil-Schraublochs drückt, **dadurch gekennzeichnet, dass** eine Innenwandung des Gehäuseflansch-Durchführungskanals (27) einen durchmessergroßen Kanalabschnitt (43) und einen durchmesserkleinen Kanalabschnitt (45) aufweist, die an einer Ringschulter ineinander übergehen, und dass der durchmesserkleine Kanalabschnitt (45) auf der, dem Schraubkopf (33) zugewandten Seite in den Öffnungsrandbereich (37) des Gehäuseflansch-Durchführungskanals (27) mündet, gegen den der Schraubkopf (33) des Schraubbolzens (25) verspannt ist, wobei sowohl die Innenwandung des Gehäuseflansch-Durchführungskanals (27) als auch der Schweißmutter-Schaft (35) Anschlagkonturen umfassen.

2. Karosseriestruktur nach Anspruch 1, **dadurch gekennzeichnet, dass** der Schweißmutter-Schaft (35) mit einem Überstand (a) die, den Gehäuseflansch (19) zugewandte Seite des Blechprofilteils (22) überragt bzw. in den Gehäuseflansch-Durchführungskanal (27) einragt, und dass im Crashfall die Innenwand des Gehäuseflansch-Durchführungskanals (27) unter Zwischenlage des Schweißmutter-Schafts (35) gegen den Schraubbolzen (25) drückt.

3. Karosseriestruktur nach Anspruch 1 oder 2, **dadurch gekennzeichnet, dass** der Schraubkopf (33) des Schraubbolzens (25) gegen einen Öffnungsrandbereich (37) des Gehäuseflansch-Durchführungskanals (27) verspannt ist, und/oder dass der Schweißmutter-Schaft (35) mit seiner, mit dem Bolzenkopf (33) des Schraubbolzens (25) zugewandten Stirnseite (39) um einen axialen Freigang (Δz) vom Bolzenkopf (33) des Schraubbolzens (35) beabstandet ist.

4. Karosseriestruktur nach Anspruch 1, **dadurch gekennzeichnet, dass** die Axiallänge (b) des durchmesserkleinen Kanalabschnitts (45) kleiner als der axiale Freigang (Δz) zwischen der Stirnseite (39) des Schweißmutter-Schafts (35) und dem Bolzenkopf (33) des Schraubbolzens (25) ist, und/oder dass der durchmesserkleine Kanalabschnitt (45) und der axiale Freigang (Δz) in radialer Flucht zueinander angeordnet sind, und dass insbesondere im Crashfall der durchmessergroße Kanalabschnitt (43) quer zur Schraubrichtung (S) in Anlage mit dem Außenumfang des Schweißmutter-Schafts (35) kommt und der durchmesserkleine Kanalabschnitt (45) in den axialen Freigang (Δz) einfährt.

5. Karosseriestruktur nach Anspruch 4, **dadurch gekennzeichnet, dass** der Außenumfang des Schweißmutter-Schafts (35) an einer umlaufenden Außenecke (53) in die Schaft-Stirnseite (39) übergeht, und dass zwischen dem durchmessergroßen Kanalabschnitt (43) und einer Ringfläche (55) der Ringschulter eine umlaufende Innenecke (57) aufgespannt ist, die eine Negativform der Schaft-Außenecke (53) bildet, und dass insbesondere im Crashfall die Innenecke (57) im Gehäuseflansch-Durchführungskanal (27) die Schaft-Außenecke (53) formschlüssig umgreift.

6. Karosseriestruktur nach Anspruch 4 oder 5, **dadurch gekennzeichnet, dass** der durchmesserkleine Kanalabschnitt (45) um einen Radialversatz (Δr) den durchmessergroßen Kanalabschnitt (43) nach radial innen überragt, und dass insbesondere der Radialversatz (Δr) kleiner als eine Wandstärke des Schafts (35) bemessen ist, so dass im Crashfall der durchmesserkleine Kanalabschnitt (45) außer Anlage mit dem Bolzenschaft (49) des Schraubbolzens (25) bleibt.

7. Karosseriestruktur nach Anspruch 4 oder 5, **dadurch gekennzeichnet, dass** der Gehäuseflansch (19) unter Zwischenlage einer Spannhülse (59) gegen das Blechprofilteil (22) verspannt ist, und dass die Spannhülse (59) mit einer Abstützbasis auf dem Gehäuseflansch (19) abgestützt ist, und dass insbesondere die Abstützbasis einen fahrzeugunteren Hülsenabschnitt (61) aufweist, der an einer Übergangskante (63) in einen radial nach außen ragenden umlaufenden Randflansch (65) übergeht, und/oder dass der fahrzeuguntere Hülsenabschnitt (61) in Anlage mit dem durchmessergroßen Kanalabschnitt (43) des Gehäuseflansch-Durchführungskanals (27) ist, während die Übergangskante (63) und der radial nach außen abragende Stützflansch (65) auf den, dem Blechprofilteil (22) zugewandten Öffnungsrandbereich (67) des Gehäuseflansch-Durchführungskanals (27) abgestützt ist, und/oder dass die Spannhülse (59) mit einem fahrzeugoberen Hülsenabschnitt (60) am Öffnungsrandbereich des Blechprofilteil-Schraubloches abgestützt ist.

## Claims

1. Body structure for an electrically powered vehicle, comprising a mounting space (12) for a traction battery (9), which mounting space is open toward the vehicle underneath in the vehicle vertical direction (z) and is bounded toward the vehicle top by a vehicle floor panel part (10), wherein the traction battery (9) is inserted into the mounting space (12) from the vehicle underneath, and wherein a housing flange (19) of the traction battery (9) engages below a body-side panel profile part (10) and is screwed to the panel profile part (10) at at least one screw point (21) from the vehicle underneath, wherein the screw point (21) has a screw bolt (25) which is oriented in the vehicle vertical direction (z), is guided with clearance through a housing flange feedthrough channel (27) and through a panel profile part screw hole, and is screwed to a weld nut (31) which is welded on the side of the panel profile part (22) that faces away from the housing flange (19), such that the housing flange (19) is firmly clamped between a screw head (33) of the screw bolt (25) and the panel profile part (10), and wherein in the event of a crash, the crash causes the traction battery (9) to be displaced until an inner wall of the housing flange feedthrough channel (27) presses the screw bolt (25) against an opening edge (51) of the panel profile part screw hole, with the screw bolt (25) under shear stress, **wherein** in order to reduce the shear stress, the weld nut (31) is extended by a shaft (35) which protrudes at least into the panel profile part screw hole, **and in that** in the event of a crash, the screw bolt (25) presses against the opening edge (51) of the panel profile part screw hole, with the weld nut shaft (35) interposed therebetween, **characterized in that** an inner wall of the housing flange feedthrough channel (27) has a large-diameter channel portion (43) and a small-diameter channel portion (45) which transition into one another at an annular shoulder, **and in that** the small-diameter channel portion (45) opens into the opening edge region (37) of the housing flange feedthrough channel (27) on the side that faces the screw head (33), against which opening edge region the screw head (33) of the screw bolt (25) is clamped, wherein both the inner wall of the housing flange feedthrough channel (27) and the weld nut shaft (35) comprise stop contours.

2. Body structure according to claim 1, **characterized in that** the weld nut shaft (35), via a projection (a), extends beyond the side of the panel profile part (22) that faces the housing flange (19) or projects into the housing flange feedthrough channel (27), **and in that** in the event of a crash, the inner wall of the housing flange feedthrough channel (27) presses against the screw bolt (25) with the weld nut shaft (35) interposed therebetween.

3. Body structure according to claim 1 or 2, **characterized in that** the screw head (33) of the screw bolt (25) is clamped against an opening edge region (37) of the housing flange feedthrough channel (27), and/or **in that** the weld nut shaft (35), via the end face (39) thereof that faces the bolt head (33) of the screw bolt (25), is spaced from the bolt head (33) of the screw bolt (35) by an axial clearance (Δz).

4. Body structure according to claim 1, **characterized in that** the axial length (b) of the small-diameter channel portion (45) is smaller than the axial clearance (Δz) between the end face (39) of the weld nut shaft (35) and the bolt head (33) of the screw bolt (25), and/or **in that** the small-diameter channel portion (45) and the axial clearance (Δz) are arranged in radial alignment with one another, **and in that** in particular in the event of a crash, the large-diameter channel portion (43) comes into contact with the outer circumference of the weld nut shaft (35) transversely with respect to the screw direction (S) and the small-diameter channel portion (45) enters the axial clearance (Δz).

5. Body structure according to claim 4, **characterized in that** the outer circumference of the weld nut shaft (35) transitions into the shaft end face (39) at a circumferential outer corner (53), **and in that** a circumferential inner corner (57) which forms a negative shape of the shaft outer corner (53) is spanned between the large-diameter channel portion (43) and an annular surface (55) of the annular shoulder, **and in that** in particular in the event of a crash, the inner corner (57) in the housing flange feedthrough channel (27) form-fittingly engages around the shaft outer corner (53).

6. Body structure according to claim 4 or 5, **characterized in that** the small-diameter channel portion (45) projects radially inwardly beyond the large-diameter channel portion (43) by a radial offset (Δr), **and in that** in particular the radial offset (Δr) is dimensioned smaller than a wall thickness of the shaft (35) such that in the event of a crash, the small-diameter channel portion (45) remains out of contact with the bolt shank (49) of the screw bolt (25).

7. Body structure according to claim 4 or 5, **characterized in that** the housing flange (19) is clamped against the panel profile part (22), with a clamping sleeve (59) interposed therebetween, **and in that** the clamping sleeve (59), via a support base, is supported on the housing flange (19), **and in that** in particular the support base has a vehicle-underneath sleeve portion (61) which transitions into a radially outwardly projecting circumferential edge flange (65) at a transition edge (63), and/or **in that** the vehicle-underneath sleeve portion (61) is in contact with the large-diameter channel portion (43) of the housing flange feedthrough channel (27), while the transition edge (63) and the radially outwardly projecting support flange (65) are supported on the opening edge region (67) of the housing flange feedthrough channel (27) that faces the panel profile part (22), and/or **in that** the clamping sleeve (59), via a vehicle-top sleeve portion (60), is supported on the opening edge region of the panel profile part screw hole.

## Revendications

1. Structure de carrosserie pour un véhicule à fonctionnement électrique, comportant un espace de montage (12) pour une batterie de traction (9) ouvert vers le bas du véhicule dans la direction de hauteur de véhicule (z), lequel espace de montage est délimité vers le haut du véhicule par une partie en tôle formant plancher de véhicule (10), dans laquelle la batterie de traction (9) est insérée dans l'espace de montage (12) depuis le bas du véhicule, et dans laquelle une bride de boîtier (19) de la batterie de traction (9) vient en prise sous une partie profilée en tôle (10) côté carrosserie et est vissée depuis le bas du véhicule à la partie profilée en tôle (10) au niveau d'au moins un point de vissage (21), dans laquelle le point de vissage (21) présente un boulon fileté (25) orienté dans la direction de hauteur de véhicule (z), lequel boulon fileté passe avec un jeu à travers un canal de passage de bride de boîtier (27) et à travers un trou de vissage de partie profilée en tôle, et est vissé à un écrou à souder (31) qui est soudé sur le côté de la partie profilée en tôle (22) opposé à la bride de boîtier (19) de sorte que la bride de boîtier (19) est serrée entre une tête de vissage (33) du boulon fileté (25) et la partie profilée en tôle (10), et dans laquelle, en cas de collision, la batterie de traction (9) est déplacée sous l'effet de la collision jusqu'à ce qu'une paroi intérieure du canal de passage de bride de boîtier (27) presse le boulon fileté (25) contre un bord d'ouverture (51) du trou de vissage de partie profilée en tôle, à savoir sous l'effet d'une contrainte de cisaillement exercée sur le boulon fileté (25), dans laquelle l'écrou à souder (31) est prolongé d'une tige (35) qui vient en prise au moins dans le trou de vissage de partie profilée en tôle pour la réduction de l'effet de contrainte de cisaillement, et qu'en cas de collision, le boulon fileté (25) appuie contre le bord d'ouverture (51) du trou de vissage de partie profilée en tôle, avec interposition de la tige de l'écrou à souder (35), **caractérisée en ce qu'**une paroi intérieure du canal de passage de bride de boîtier (27) présente une section de canal de grand diamètre (43) et une section de canal de petit diamètre (45), lesquelles se prolongent l'une dans l'autre au niveau d'un épaulement annulaire, **et en ce que** la section de canal de petit diamètre (45) débouche, côté tourné vers la tête de vissage (33), dans la zone de bord d'ouverture (37) du canal de passage de bride de boîtier (27) contre laquelle la tête de vissage (33) du boulon fileté (25) est serrée, dans laquelle tant la paroi intérieure du canal de passage de bride de boîtier (27) que la tige de l'écrou à souder (35) comprennent des contours de butée.

2. Structure de carrosserie selon la revendication 1, **caractérisée en ce que** la tige de l'écrou à souder (35) dépasse, avec une saillie (a), du côté de la partie profilée en tôle (22) tourné vers la bride de boîtier (19) ou vient en prise dans le canal de passage de bride de boîtier (27), **et en ce que**, en cas de collision, la paroi intérieure du canal de passage de bride de boîtier (27) appuie contre le boulon fileté (25), avec interposition de la tige de l'écrou à souder (35).

3. Structure de carrosserie selon la revendication 1 ou 2,
**caractérisée en ce que** la tête de vissage (33) du boulon fileté (25) est serrée contre une zone de bord d'ouverture (37) du canal de passage de bride de boîtier (27), **et/ou en ce que** la tige de l'écrou à souder (35) est espacée, avec son côté frontal (39) tourné vers la tête de vissage (33) du boulon fileté (25), d'un jeu axial (Δz) de la tête de vissage (33) du boulon fileté (35).

4. Structure de carrosserie selon la revendication 1, **caractérisée en ce que** la longueur axiale (b) de la section de canal de petit diamètre (45) est inférieure au jeu axial (Δz) entre le côté frontal (39) de la tige de l'écrou à souder (35) et la tête de vissage (33) du boulon fileté (25), **et/ou en ce que** la section de canal de petit diamètre (45) et le jeu axial (Δz) sont disposés en alignement radial l'un par rapport à l'autre, **et en ce que**, en particulier en cas de collision, la section de canal de grand diamètre (43) vient en contact, transversalement à la direction de vissage (S), avec la circonférence extérieure de la tige de l'écrou à souder (35) et la section de canal de petit diamètre (45) pénètre dans le jeu axial (Δz).

5. Structure de carrosserie selon la revendication 4,
**caractérisée en ce que** la circonférence extérieure de la tige de l'écrou à souder (35) se prolonge, au niveau d'un angle extérieur (53) circonférentiel, dans le côté frontal de la tige (39), **et en ce qu'**un angle intérieur (57) circonférentiel s'étend entre la section de canal de grand diamètre (43) et une surface annulaire (55) de l'épaulement annulaire, lequel angle intérieur forme une contreforme de l'angle extérieur de la tige (53), **et en ce que**, en particulier en cas de collision, l'angle intérieur (57) enserre par complémentarité de forme l'angle extérieur de la tige (53) dans le canal de passage de bride de boîtier (27).

6. Structure de carrosserie selon la revendication 4 ou 5,
**caractérisée en ce que** la section de canal de petit diamètre (45) dépasse radialement vers l'intérieur d'un décalage radial (Δr) de la section de canal de grand diamètre (43), **et en ce que**, en particulier, le décalage radial (Δr) est dimensionné de manière à être inférieur à une épaisseur de paroi de la tige (35) de sorte que, en cas de collision, la section de canal de petit diamètre (45) reste hors de contact avec la tige (49) du boulon fileté (25).

7. Structure de carrosserie selon la revendication 4 ou 5,
**caractérisée en ce que** la bride de boîtier (19) est serrée contre la partie profilée en tôle (22) avec interposition d'une douille de serrage (59), **et en ce que** la douille de serrage (59) est en appui, avec une base d'appui, sur la bride de boîtier (19), **et en ce que**, en particulier, la base d'appui présente une section de douille sous le véhicule (61) qui se prolonge, au niveau d'un rebord de prolongation (63), dans une bride de bord (65) circonférentielle faisant saillie radialement vers l'extérieur, **et/ou en ce que** la section de douille sous le véhicule (61) est en contact avec la section de canal de grand diamètre (43) du canal de passage de bride de boîtier (27), tandis que le rebord de prolongation (63) et la bride d'appui (65) faisant saillie radialement vers l'extérieur sont en appui sur la zone de bord d'ouverture (67) du canal de passage de bride de boîtier (27) tournée vers la partie profilée en tôle (22), **et/ou en ce que** la douille de serrage (59) est en appui, avec une section de douille au-dessus du véhicule (60), sur la zone de bord d'ouverture du trou de vissage de la partie profilée en tôle.
